# EUROPEAN PATENT SPECIFICATION

(11) **EP 4 015 255 B1**
(45) Date of publication and mention of the grant of the patent: **02.04.2025**
(21) Application number: 21211359.1
(22) Date of filing: 30.11.2021
(51) Int. Cl.: B60C 23/04, B60C 11/24, B29D 30/00

(54) **TIRE WITH POLYMER PLUG FOR TREAD WEAR SENSING AND METHOD OF MANUFACTURING**
REIFEN MIT POLYMERSTECKER FÜR LAUFFLÄCHENABNUTZUNGSERFASSUNG UND VERFAHREN ZUR HERSTELLUNG
PNEU DOTÉ D'UN BOUCHON DE POLYMÈRE POUR LA DÉTECTION D'USURE DE BANDE DE ROULEMENT ET SON PROCÉDÉ DE FABRICATION

(30) Priority: 15.12.2020 US 202063125440 P; 15.10.2021 US 202117502076
(43) Date of publication of application: 22.06.2022
(73) Proprietor: The Goodyear Tire & Rubber Company, Akron, OH 44316 (US)
(72) Inventor: ZHAO, Junling, Hudson, 44236 (US); SUH, Peter Jung-min, Copley, 44321 (US); WEST, Jeffrey McKay, Uniontown, 44685 (US); GAU, Jin Shy Steve, Hudson, 44236 (US); KESTNER, Michael William, Canton, 44708 (US); KOERNER, James Earl, Uniontown, 44685 (US); KILLMEYER, Andrew Peter, Macedonia, 44056 (US); LICARI, Frank George, Solon, 44139 (US)
(74) Representative: Kutsch, Bernd

(56) References cited:
- EP-A1- 2 810 794
- EP-A1- 3 611 041
- WO-A1-2018/047781
- KR-B1- 102 124 829
- US-A1- 2005 061 069
- US-A1- 2012 300 809

## Description

### Field of the Invention

The invention relates to vehicle tires. More particularly, the invention relates to vehicle tires with sensors that determine various conditions within the tires. Specifically, the invention is directed to a tire with a tread including a polymer plug that provides a direct wear sensor system for the tire, and to methods of manufacturing.

### Background of the Invention

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

The use of tread wear indicators that are formed on a tire tread before or after curing is known in the art. For example, prior art mechanical tread wear indicators include color indicia disposed below certain tread elements, tie bars disposed in the tread grooves, or characters formed in the tread elements, all of which provide a visual indicator of wear. Such mechanical indicators may be difficult for a vehicle operator to see, and thus do not easily provide information to the operator.

In addition, it is often desirable to collect electronic data for the wear state of the tire. The data can be communicated to electronic systems of the vehicle, such as vehicle stability and/or braking systems, in order to provide improved control of the vehicle and to monitor or track driving behavior. Mechanical tread wear indicators are not able to provide such data to electronic systems of the vehicle.

To provide an indication of tire wear to vehicle electronic systems, prior art indirect wear estimation techniques were developed. Such techniques involve estimation of tire wear through certain tire and vehicle parameters, rather than direct measurement of wear. For example, tire pressure, tire temperature, vehicle speed, vehicle mileage, vehicle acceleration and other parameters may be employed to estimate tire wear. Such indirect estimation of tire wear can be difficult to perform accurately, and typically involves complex modeling techniques.

In order to provide a wear indication to vehicle electronic systems based on a direct measurement of tire wear, prior art electronic wear sensors were developed. Such sensors are known in the art as direct wear sensors, as they attempt to directly measure tire wear, rather than providing an estimate from indirect means. By way of example, prior art direct wear sensors include resistance-based electronic sensors that typically are incorporated into tread elements of tires. As the tread element wears, resistors in the sensor also wear, leading to a change in the electrical resistance of the sensor. By measuring the resistance of the sensor and transmitting the measured resistance data to a processor, wear of the tread can be determined.

While prior art direct wear sensors are acceptable for their intended purpose, many such sensors are difficult to install in the tire. Other direct wear sensors cannot withstand the harsh operating environment of the tire for a prolonged period, such as the recommended life of the tire. Still other direct wear sensors are not capable of maintaining precise and repeatable indication of tire wear over the recommended life of the tire.

As a result, it is desirable to develop a direct wear sensor system for a vehicle tire that includes a structure which is easy to install in the tire, withstands the operating environment of the tire, accurately indicates tire wear in a repeatable manner, and is capable of transmitting a wear indication to an electronic control system of the vehicle.

KR 102 124 829 B1 describes a tire with a tread element with a polymer plug for tread wear sensing. A chamber is formed in the tread element and a sensor unit is mounted to the tire. The polymer plug includes a wire being disposed in the chamber, the wire including proximal ends and a distal end near the radially outer surface of the tread. An electrical circuit is formed by each proximal end of the wire electrically contacting a respective one of the sensor unit electrical contacts, whereby. when the selected one of the tread elements wears down to the distal end of the wire, the distal end of the wire breaks, thereby breaking the electrical circuit.

US 2005/0061069 A1 describes a tire with a polymer plug for wear sensing in accordance with the preamble of claim 1.

Another tire comprising a sensor device integrated in a tire tread for determining tread wear of the tire is known from EP 2 810 794 A1.

US 2012/300809 A1 describes a temperature sensor and a polymer plug. An epoxy material is filled in a chamber of the tire and cured.

### Summary of the Invention

The invention relates to a tire in accordance with claim 1 and to methods of manufacturing in accordance with claims 11 or 13 respectively.

Dependent claims refer to preferred embodiments of the invention.

According to an aspect of an exemplary embodiment of the invention, a tire with a polymer plug for tread wear sensing is provided. The tire includes a pair of sidewalls, each one of which extends radially outwardly from a respective bead area to a ground-contacting tread. The tread is formed with a plurality of tread elements and a radially outer surface. A chamber is formed in a selected one of the tread elements. A sensor unit is mounted to the tire and includes a pair of electrical contacts. The polymer plug includes a wire disposed in the chamber. The wire includes proximal ends and a distal end near a radially outer surface of the tread. A liquid polymer is injected into the chamber and cured. An electrical circuit is formed by each proximal end of the wire electrically contacting a respective one of the sensor unit electrical contacts. When the selected one of the tread elements wears down to the distal end of the wire, the distal end of the wire breaks, which breaks the electrical circuit. A notice is transmitted by the sensor unit when the electrical circuit has broken.

### Definition

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"CAN bus" is an abbreviation for controller area network.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact created by the tire tread with a flat surface, such as the ground, as the tire rotates or rolls.

"Lateral" means an axial direction.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

### Brief Description of Drawings

The invention will be described by way of example and with reference to the accompanying drawings, in which:
Figure 1 is a schematic side view of a vehicle with tires that include an exemplary embodiment of the tire with polymer plug for tread wear sensing of the present invention;
Figure 2 is a perspective cross-sectional view of a tire shown in Figure 1, prior to installation of the polymer plug;
Figure 3 is a perspective view of a TPMS sensor employed in the exemplary embodiment of the tire with polymer plug for tread wear sensing of the present invention;
Figure 4 is a cross-sectional view of a portion of a tire with a chamber formed for the polymer plug for tread wear sensing of the present invention;
Figure 5 is a schematic representation of a wire employed in the exemplary embodiment of the tire with polymer plug for tread wear sensing of the present invention;
Figure 6 is a cross-sectional view of a portion of a tire with the wire shown in Figure 5 installed in the chamber shown in Figure 4, with the radial orientation of the tire being reversed from Figure 4;
Figure 7 is a cross-sectional view of a portion of a tire during forming of the polymer plug for tread wear sensing of the present invention, with the radial orientation of the tire being the same as Figure 6;
Figure 8 is a cross-sectional view of a portion of an exemplary embodiment of the tire with polymer plug for tread wear sensing of the present invention, showing the tire in an unworn state; and
Figure 9 is a cross-sectional perspective view of the tire with polymer plug shown in Figure 8, showing the tire in a worn state.

Similar numerals refer to similar parts throughout the drawings.

### Detailed Description of Preferred Embodiments of the Invention

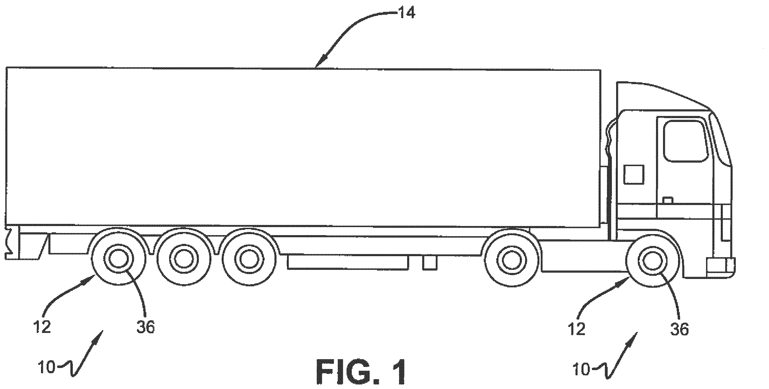

An exemplary embodiment of the tire 12 with a polymer plug for tread wear sensing of the present invention is presented in Figures 1 through 9. With particular reference to Figure 1, the tire 12 with a polymer plug 10 provides a system for indicating the wear on one or more tires supporting a vehicle 14. While the vehicle 14 is depicted as a commercial truck, the invention is not to be so restricted. The principles of the invention find application in other vehicle categories, such as passenger vehicles, off-the-road vehicles and the like, in which vehicles may be supported by more or fewer tires than shown in Figure 1.

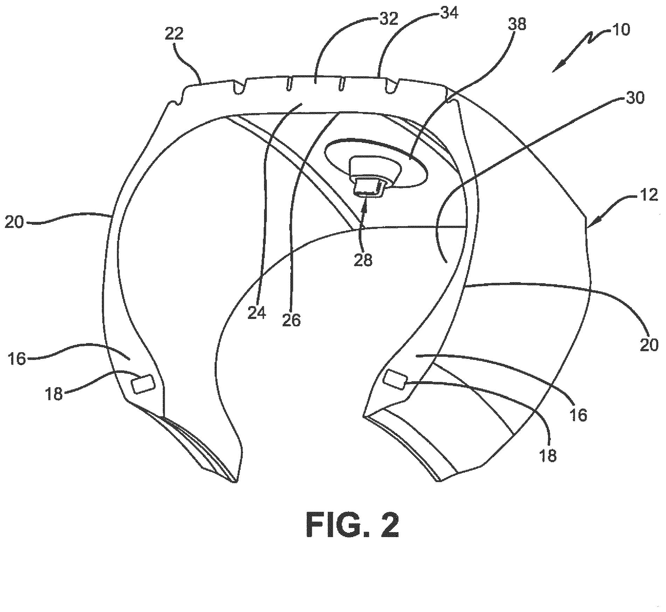

Turning to Figure 2, the tire 12 includes a pair of bead areas 16, each one of which is formed with a bead core 18 that is embedded in the respective bead areas. Each one of a pair of sidewalls 20 extends radially outwardly from a respective bead area 16 to a ground-contacting tread 22. The tread 22 is formed with multiple tread elements or tread blocks 32 and includes a radially outer surface 34. The tire 12 is reinforced by a carcass 24 that toroidally extends from one bead area 16 to the other bead area, as known to those skilled in the art. An innerliner 26 is formed on the inner or inside surface of the carcass 24. The tire 12 is mounted on the flange of a wheel or rim 36 (Figure 1) as known in the art, forming an internal cavity 30.

A sensor unit 28 preferably is mounted to the tire 12. The sensor unit 28 detects certain real-time parameters of the tire 12, and preferably includes a pressure sensor to sense the inflation pressure within a cavity 30 of the tire, and a temperature sensor to sense the temperature of the tire and/or the temperature in the cavity. The sensor unit 28 may be a commercially available tire pressure monitoring system (TPMS) module or sensing unit.

The sensor unit 28 preferably also includes a processor and memory to store tire identification (ID) information for each specific tire 12. For example, the tire ID may include manufacturing information for the tire 12, including: the tire model; size information, such as rim size, width, and outer diameter; manufacturing location; manufacturing date; a treadcap code that includes or correlates to a compound identification; and a mold code that includes or correlates to a tread structure identification. The tire ID may also include a service history or other information to identify specific features and parameters of each tire 12.

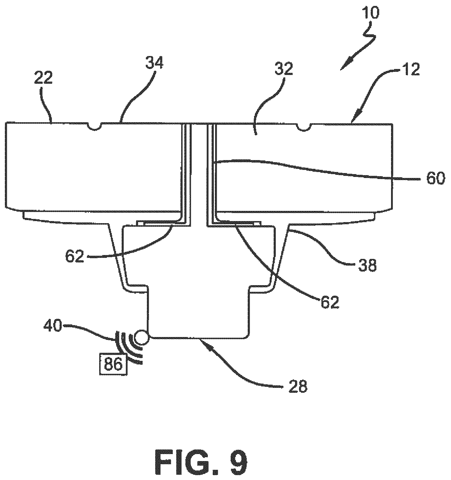

The sensor unit 28 preferably further includes an antenna for wirelessly transmitting 40 (Figure 9) measured parameters and tire ID data to a remote processor for analysis, such as a processor integrated into a vehicle electronic control unit and/or CAN bus.

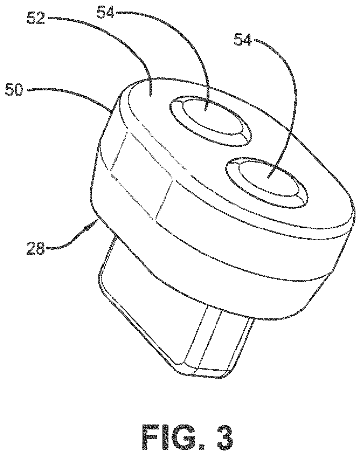

The sensor unit 28 may be mounted to the tire 12 using a container 38, which receives the sensor unit and is attached to the innerliner 26 by an adhesive. Preferably, the container 38 is flexible and is formed of an elastomer or polymer. The container 38 may be attached to the tire 12 before or after curing of the tire, and the sensor unit 28 preferably is inserted into the container after curing of the tire. As shown in Figure 3, the sensor unit 28 preferably includes a rigid housing 50 formed with a base 52. A pair of electrical contacts 54 are mounted on the base 52 and extend through the housing 50.

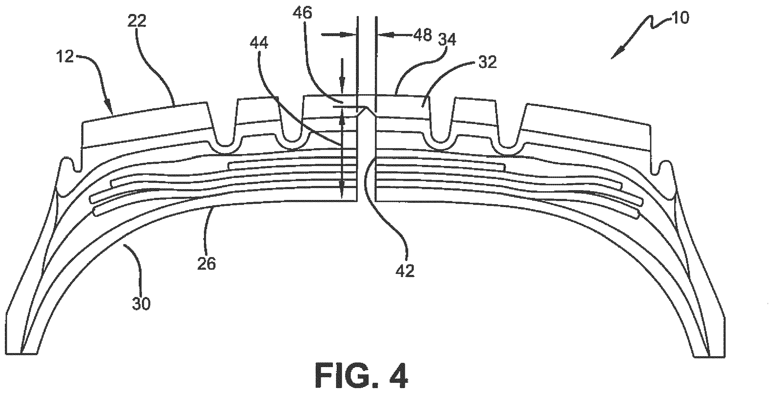

Turning to Figure 4, a chamber 42 is formed in a selected tread element 32, preferably before the container 38 and the sensor unit 28 are attached to the tire 12. The chamber 42 extends from the internal cavity 30 into the selected tread element 32, but not completely through the selected tread element to the tread surface 34.

To form the chamber 42, different techniques may be employed. For example, when the tire 12 is a green or uncured tire, an object such as a nail may be inserted into the green tire from the direction of the cavity 30 and into the selected tread element 32. The object includes a length that provides a corresponding radial length 44 for the chamber 42. The length 44 ends at a set distance 46 below the tread outer surface 34. The object also includes a diameter that provides a corresponding diameter 48 for the chamber 42. The diameter 48 of the chamber 42 ensures that a wire 60, to be described below, may be inserted into the chamber. Once the object is inserted into the tire 12, the tire is cured. After the tire 12 has been cured, the object is removed, which creates the chamber 42. Preferably, the object includes a surface coating, such as a low-friction coating, which enables easy removal of the nail after the tire has been cured.

When the tire 12 is a cured tire, the chamber 42 may be formed by drilling from the direction of the cavity 30 and into the selected tread element 32. When the chamber 42 is formed by drilling, the chamber includes the radial length 44 and the diameter 48. Of course, other techniques that are known to those skilled in the art may be employed to form the chamber 42 in a cured or uncured tire 12.

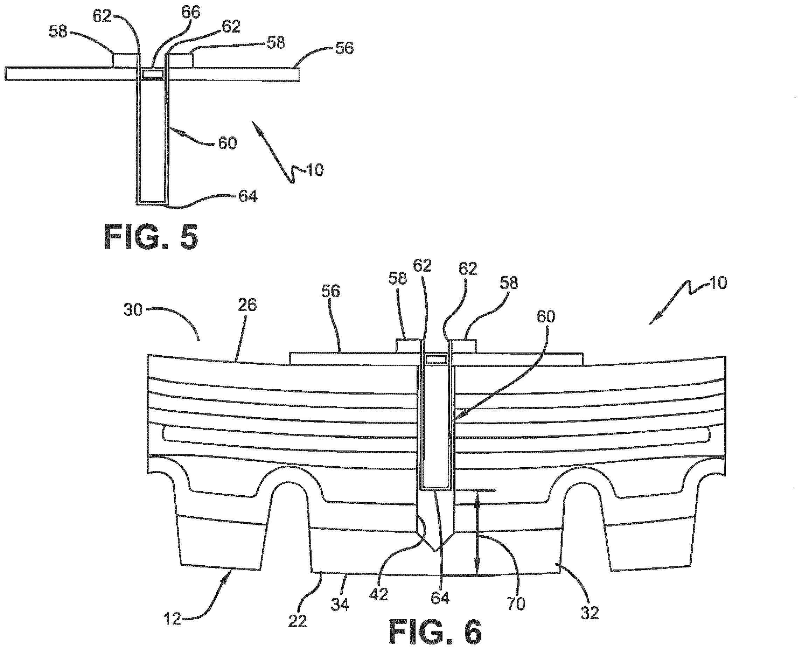

With reference to Figures 5 and 6, the tire with a polymer plug 10 includes a conductive wire 60. The wire 60 preferably is an insulated wire, but may be an uninsulated wire, depending on particular design considerations. The wire is formed in a U-shape and thus has proximal ends 62 and a distal end 64. The proximal ends 62 of the wire 60 contact the electrical contacts 54 of the sensor unit 28, as will be described in greater detail below. Optionally, the proximal ends 62 of the wire 60 may be attached to a printed circuit board 56 through a conductive attachment 58. The printed circuit board 56 provides a stable connection point for the proximal ends 62 of the wire 60. The printed circuit board 56 is formed with an opening 66, which enables the distal end 64 of the wire 60 to be inserted through the circuit board.

The distal end 64 of the wire 60 is inserted into the chamber 42 from the tire cavity 30, and the printed circuit board 56 provides a positive mechanical stop for the wire in the chamber. The length 44 and diameter 48 of the chamber 42 allow the wire 60 to be received and seat in the chamber, with the distal end 64 of the wire near the tread surface 34. Preferably, the distal end 64 of the wire 60 is a set distance 70 below the tread surface 34.

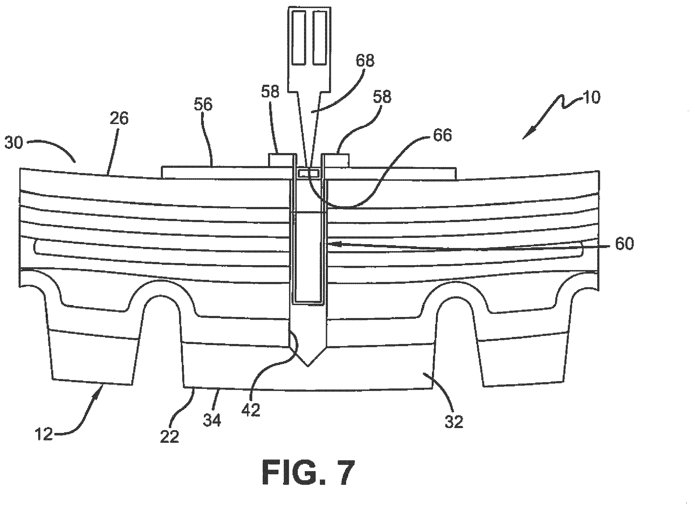

Referring to Figure 7, once the wire 60 is seated in the chamber 42, a liquid polymer 68 is injected through the printed circuit board opening 66 an into the chamber. The liquid polymer 68 is then cured to solidify it.

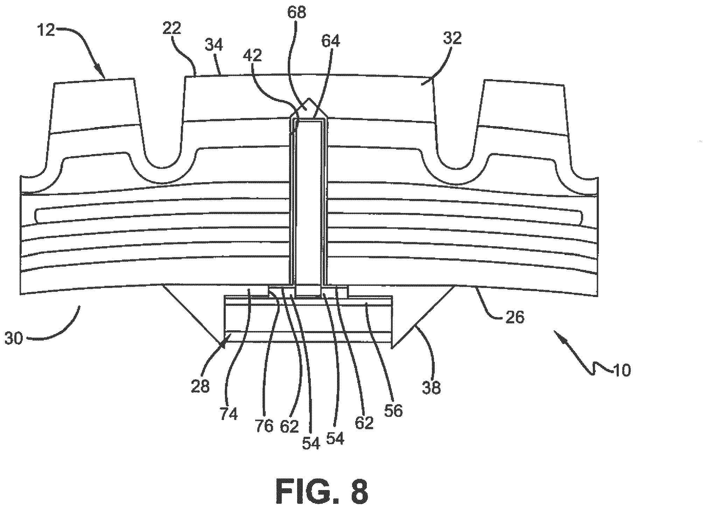

Turning to Figure 8, after the liquid polymer 68 has been cured, the container 38 is attached to the tire 12. More particularly, the container 38 includes a base 74 that is attached to the innerliner 26 with an adhesive. The container base 74 is formed with an opening 76, which enables the proximal ends 62 of the wire 60 to pass into the container 38. The sensor unit 28 is installed by inserted it into the container 38, which receives and secures the sensor unit. The sensor unit 28 is rotated to enable each sensor electrical contact 54 (Figure 3) to contact a respective proximal end 62 of the wire 60.

Turning to Figures 8 and 9, operation of the tire with a polymer plug 10 is shown. With particular reference to Figure 8, a continuous electrical circuit is formed by the wire 60 and the contact of each proximal wire end 62 with each respective electrical contact 54 of the sensor unit 28. The distal end 64 of the wire 60 is disposed at a predetermined distance 70 (Figure 6) below the radially outer surface 34 of the tread 22, which corresponds to a minimum recommended tread depth.

Referring to Figure 9, as the tread 22 wears, the cured liquid polymer 68 also wears. When the tread 22 and the cured liquid polymer 68 wear down to the wire 60, the distal end 64 of the wire 60 breaks, creating a break in the electrical circuit formed by the wire and the contact of each proximal wire end 62 with each respective sensor unit electrical contact 54. The sensor unit 28 senses the break in the electrical circuit, and wirelessly transmits 40 a notice 86 that the electrical circuit has broken and/or that the minimum recommended tread depth has been reached.

The notice 86 transmitted 40 by the sensor unit 28 may be sent to a remote processor, such as a processor that is integrated into a vehicle electronic control unit, CAN bus, and/or a cloud-based server. The notice 86, by communicating that the minimum tread depth has been reached, thus indicates when replacement or retreading of the tire 12 should take place.

In this manner, the tire with a polymer plug 10 for tread wear sensing of the present invention indicates tire wear with components that are mounted within the tire 12, and does not require sensors that are external to the tire. The tire with a polymer plug 10 provides a direct wear sensor system for a vehicle tire 12 that includes a structure which is easy to install in the tire, withstands the operating environment of the tire, accurately indicates tire wear in a repeatable manner, and is capable of transmitting a wear indication to an electronic control system of the vehicle 14.

The present invention also includes a method of determining wear of a tire using a polymer plug, and a method of forming a tire with a polymer plug for indicating tread depth. Each method includes steps in accordance with the description that is presented above and shown in Figures 1 through 9.

It is to be understood that the structure of the above-described tire with a polymer plug 10 may be altered or rearranged, or components or steps known to those skilled in the art omitted or added, without affecting the overall concept or operation of the invention. For example, a single polymer plug may be disposed in the tread 22 of the tire 12, or multiple polymer plugs may be disposed in the tread about the tire. In addition, the tread wear plug 44 may include multiple wires 60, each one having a distal end 64 spaced apart from the other wires, which enables the tread wear plug to indicate different wear states of the tread 22, without affecting the overall concept or operation of the invention.

## Claims

1. A tire with a polymer plug for tread wear sensing,
wherein the tire (12) comprises a pair of sidewalls (20), each one of which extends radially outwardly from a respective bead area (16) to a tread (22),
wherein the tread (22) is formed with a plurality of tread elements (32) and a radially outer surface (34),
wherein a chamber (42) is formed in a selected one of the tread elements (32),
wherein a sensor unit (28) is mounted to the tire (12), the sensor unit (28) including a pair of electrical contacts (54),
wherein the polymer plug (10) includes a wire (60) being disposed in the chamber (42), the wire (60) including proximal ends (62) and a distal end (64) near the radially outer surface (34) of the tread (22),
wherein an electrical circuit (56) is formed by each proximal end (62) of the wire (60) electrically contacting a respective one of the sensor unit electrical contacts (54), whereby when the selected one of the tread elements (32) wears down to the distal end (64) of the wire (60), the distal end (64) of the wire breaks, thereby breaking the electrical circuit (56),
wherein a cured solidified liquid polymer is provided in the chamber (42),
and wherein the proximal ends (62) of the wire (60) are attached to a printed circuit board (56),
**characterized in that** the printed circuit board (56) is formed with an opening (66) and the distal end (64) of the wire (60) is inserted through the circuit board (56) into the chamber (42).

2. The tire with a polymer plug of claim 1, configured such that a notice (86) can be transmitted by the sensor unit (28) when the electrical circuit (56) has broken.

3. The tire with a polymer plug of at least one of the previous claims, wherein the distal end (64) of the wire (60) is disposed at a set distance (70) below the radially outer surface (34) of the tread (22), the set distance (70) preferably corresponding to a minimum recommended tread depth.

4. The tire with a polymer plug of at least one of the previous claims, wherein the chamber (42) does not extend through the selected tread element (32) to the tread surface (34).

5. The tire with a polymer plug of claim 1, wherein the printed circuit board (56) provides a positive mechanical stop for the wire (60) in the chamber (42).

6. The tire with a polymer plug of at least one of the previous claims, wherein the sensor unit (28) is mounted to the tire (12) using a container (38).

7. The tire with a polymer plug of claim 6, wherein the container (38) contains the sensor unit (28) and is attached to an innerliner (26) of the tire (12) by an adhesive.

8. The tire with a polymer plug of claim 6 or 7, wherein the container (38) includes a base (52) with an opening, and wherein the proximal ends (62) of the wire (60) pass through the opening in the base (52).

9. The tire with a polymer plug of at least one of the previous claims, wherein the sensor unit (28) includes an antenna for wirelessly transmitting a notice (86) to a remote processor.

10. The tire with a polymer plug of at least one of the previous claims, wherein the polymer plug (10) further comprises multiple wires, wherein each of said wires includes a distal end that is spaced apart from the other wires.

11. A method of manufacturing a tire with a polymer plug (10) in accordance with at least one of the previous claims, the method comprising the step of injecting a liquid polymer (68) into the chamber (42) and curing the liquid polymer (68) thereby providing the cured solidified liquid polymer in the chamber (42).

12. The method of claim 11 wherein the container (38) is attached to the tire (12) after the liquid polymer has been cured.

13. A method of manufacturing a tire with a polymer plug (10) in accordance with at least one of the previous claims 1 to 10, the method comprising the step of forming the chamber (42) by (i) inserting an object into a selected one of the tread elements (32) from a direction of a tire cavity (30) prior to a curing of the tire (12), and removing the object after curing the tire (12), or by (ii) by drilling into a selected one of the tread elements (32) from a direction of a tire cavity (30).

## Patentansprüche

1. Luftreifen, der einen den Laufflächenverschleiß erfassenden Polymerstopfen umfasst;
wobei der Luftreifen (12) ein Paar Seitenwände (20) umfasst, von denen sich jede in der radialen Richtung außerhalb eines jeweiligen Wulstbereichs (16) bis zu einer Lauffläche (22) erstreckt;
wobei die Lauffläche (22) aus einer Anzahl von Laufflächenelementen (32) und einer in der radialen Richtung äußeren Oberfläche (34) hergestellt ist;
wobei eine Kammer (42) in einem Element gebildet wird, das aus den Laufflächenelementen (32) ausgewählt wurde;
wobei eine Sensoreinheit (28) an dem Luftreifen (12) angebracht ist, wobei die Sensoreinheit (28) ein Paar elektrischer Kontakte (54) umfasst;
wobei der Polymerstopfen (10) einen Draht (60) einschließt, der in der Kammer (42) angebracht ist; wobei der Draht (60) proximale Enden (62) und ein distales Ende (64) in der Nähe der in der radialen Richtung äußeren Oberfläche (34) der Lauffläche (22) einschließt;
wobei ein elektrischer Schaltkreis (56) aus jedem proximalen Ende (62) des Drahtes (60) gebildet wird, das elektrisch mit einem jeweiligen der elektrischen Kontakte (54) der Sensoreinheit in Kontakt kommt; wobei, wenn das Element, das aus den Laufflächenelementen (32) ausgewählt wurde, sich bis zu dem distalen Ende (64) des Drahtes (60) abnutzt, das distale Ende (64) des Drahtes bricht, was zu einer Unterbrechung des elektrischen Schaltkreises (56) führt;
wobei ein flüssiges Polymer, das durch Vulkanisation verfestigt wurde, in der Kammer (42) bereitgestellt ist;
und wobei die proximalen Enden (62) des Drahtes (60) an einer Leiterplatte (56) befestigt sind;
**dadurch gekennzeichnet, dass** die Leiterplatte (56) mit einer Öffnung (66) ausgeführt ist, und das distale Ende (64) des Drahtes (60) durch die Leiterplatte (56) in die Kammer (42) eingeführt ist.

2. Luftreifen, der einen Polymerstopfen umfasst, nach Anspruch 1, der so konfiguriert ist, dass eine Anzeige (86) von der als Sensor fungierenden Einheit (28) übertragen werden kann, wenn der elektrische Stromkreis (56) unterbrochen ist.

3. Luftreifen, der einen Polymerstopfen umfasst, nach mindestens einem der vorhergehenden Ansprüche, wobei das distale Ende (64) des Drahts (60) in einem festgelegten Abstand (70) unterhalb der in der radialen Richtung äußeren Oberfläche (34) der Lauffläche (22) angebracht ist, wobei der festgelegte Abstand (70) vorzugsweise einer empfohlenen Mindestprofiltiefe entspricht.

4. Luftreifen, der einen Polymerstopfen umfasst, nach mindestens einem der vorhergehenden Ansprüche, wobei die Kammer (42) sich nicht durch das ausgewählte Laufflächenelement (32) hindurch bis zur Oberfläche (34) der Lauffläche erstreckt.

5. Luftreifen, der einen Polymerstopfen umfasst, nach Anspruch 1, wobei die Leiterplatte (56) einen festen mechanischen Anschlag für den Draht (60) in der Kammer (42) aufweist.

6. Reifen, der einen Polymerstopfen umfasst, nach mindestens einem der vorhergehenden Ansprüche, wobei die Sensoreinheit (28) unter Verwendung eines Behälters (38) an dem Luftreifen (12) angebracht ist.

7. Luftreifen, der einen Polymerstopfen umfasst, nach Anspruch 6, wobei der Behälter (38) die Einheit (28) enthält, die als Sensor dient, und an der Innenschicht (26) des Luftreifens (12) mittels eines Klebstoffs befestigt ist.

8. Luftreifen, welcher einen Polymerstopfen umfasst, nach Anspruch 6, wobei der Behälter (38) eine Basis (52) enthält, welche mit einer Öffnung versehen ist; und wobei die proximalen Enden (62) des Drahtes (60) durch die Öffnung in der Basis (52) geführt werden.

9. Luftreifen, der einen Polymerstopfen umfasst, wobei der Reifen mindestens einen der vorhergehenden Ansprüche umfasst, wobei die Sensoreinheit (28) eine Antenne umfasst, die dazu bestimmt ist, eine Anzeige (86) drahtlos an einen entfernten Prozessor zu übertragen.

10. Luftreifen, der einen Polymerstopfen umfasst, nach mindestens einem der vorhergehenden Ansprüche, wobei der Polymerstopfen (10) ferner eine Anzahl von Metalldrähten umfasst; wobei jeder der oben genannten Metalldrähte ein distales Ende einschließt, das von den anderen Metalldrähten entfernt angebracht ist.

11. Verfahren zum Herstellen eines Luftreifens, der einen Polymerstopfen umfasst, nach mindestens einem der vorhergehenden Ansprüche, wobei das Verfahren den Schritt des Einspritzens eines flüssigen Polymers (68) in die Kammer (42) und des Vulkanisierens des flüssigen Polymers (68) umfasst, um dadurch in der Kammer (42) das flüssige Polymer bereitzustellen, das durch Vulkanisation verfestigt worden ist.

12. Verfahren nach Anspruch 11, wobei der Behälter (38) an dem Luftreifen (12) befestigt wird, nachdem das flüssige Polymer vulkanisiert worden ist.

13. Verfahren zum Herstellen eines Luftreifens, der einen Polymerstopfen umfasst, gemäß mindestens einem der vorhergehenden Ansprüche, wobei das Verfahren den Schritt umfasst, in dem die Kammer (42) gebildet wird: (i) durch einführen eines Objekts in ein Element, das aus den Laufflächenelementen (32) ausgewählt wurde, aus einer Richtung eines Hohlraums (30) des Luftreifens vor dem Vulkanisieren des Reifens (12) und durch entfernen des Objekts nach dem Vulkanisieren des Reifens (12); oder (ii) durch bohren in ein Element, das aus den Laufflächenelementen (32) ausgewählt wurde, aus einer Richtung eines Hohlraums (30) des Reifens.

## Revendications

1. Bandage pneumatique qui comprend un bouchon polymère destiné à détecter une usure de la bande de roulement ;
dans lequel le bandage pneumatique (12) comprend une paire de flancs (20), chacun de ces derniers s'étendant, dans la direction radiale, à l'extérieur d'une zone respective (16) faisant office de talon jusqu'à une bande de roulement (22) ;
dans lequel la bande de roulement (22) est réalisée à partir d'un certain nombre d'éléments de bande de roulement (32) et d'une surface (34) externe dans la direction radiale ;
dans lequel une chambre (42) est formée dans un élément qui a été sélectionné à partir des éléments de bande de roulement (32) ;
dans lequel une unité (28) faisant office de capteur est montée sur le bandage pneumatique (12), l'unité (28) faisant office de capteur englobant une paire de contacts électriques (54) ;
dans lequel le bouchon polymère (10) englobe un fil métallique (60) qui est disposé dans la chambre (42), le fil métallique (60) englobant des extrémités proximales (62) et une extrémité distale (64) à proximité de la surface (34), externe dans la direction radiale, de la bande de roulement (22) ;
dans lequel un circuit électrique (56) est réalisé à partir de chaque extrémité proximale (62) du fil métallique (60) qui entre en contact, par voie électrique, avec un contact électrique respectif parmi les contacts électriques (54) de l'unité faisant office de capteur, dans lequel, lorsque l'élément qui a été sélectionné à partir des éléments de bande de roulement (32) s'use jusqu'à l'extrémité distale (64) du fil métallique (60), l'extrémité distale (64) du fil métallique se rompt, donnant lieu à une rupture du circuit électrique (56) ;
dans lequel un polymère liquide qui a été solidifié par l'intermédiaire d'une vulcanisation est prévu dans la chambre (42) ;
et dans lequel les extrémités proximales (62) du fil métallique (60) sont fixées à une carte de circuits imprimés (56) ;
**caractérisé en ce que** la carte de circuits imprimés (56) est réalisée avec une ouverture (66), et l'extrémité distale (64) du fil métallique (60) est insérée à travers le la carte de circuits imprimés (56) jusque dans la chambre (42).

2. Bandage pneumatique, qui comprend un bouchon polymère, selon la revendication 1, qui est configuré d'une manière telle qu'une indication (86) peut être transmise par l'unité (28) faisant office de capteur lorsque le circuit électrique (56) est rompu.

3. Bandage pneumatique, qui comprend un bouchon polymère, selon au moins une des revendications précédentes, dans lequel l'extrémité distale (64) du fil métallique (60) est disposée à une distance établie (70) en dessous de la surface (34), externe dans la direction radiale, de la bande de roulement (22), la distance établie (70) correspondant de manière préférentielle à une profondeur de sculpture minimale recommandée.

4. Bandage pneumatique, qui comprend un bouchon polymère, selon au moins une des revendications précédentes, dans lequel la chambre (42) ne s'étend pas, à travers l'élément de bande de roulement (32) qui a été sélectionné, jusqu'à la surface (34) de la bande de roulement.

5. Bandage pneumatique, qui comprend un bouchon polymère, selon la revendication 1, dans lequel la carte de circuits imprimés (56) procure un arrêt mécanique fixe pour le fil métallique (60) dans la chambre (42).

6. Bandage pneumatique, qui comprend un bouchon polymère, selon au moins une des revendications précédentes, dans lequel l'unité (28) faisant office de capteur est montée sur le bandage pneumatique (12) en utilisant un récipient (38).

7. Bandage pneumatique, qui comprend un bouchon polymère, selon la revendication 6, dans lequel le récipient (38) contient l'unité (28) faisant office de capteur et est fixé au calandrage intérieur (26) du bandage pneumatique (12) par l'intermédiaire d'un adhésif.

8. Bandage pneumatique, qui comprend un bouchon polymère, selon la revendication 6, dans lequel le récipient (38) contient une base (52) qui est munie d'une ouverture ; et dans lequel les extrémités proximales (62) du fil métallique (60) passent par l'ouverture pratiquée dans la base (52).

9. Bandage pneumatique, qui comprend un bouchon polymère, selon au moins une des revendications précédentes, dans lequel l'unité (28) faisant office de capteur englobe une antenne qui est destinée à transmettre sans fil une indication (86) à un processeur mis à distance.

10. Bandage pneumatique, qui comprend un bouchon polymère, selon au moins une des revendications précédentes, dans lequel le bouchon polymère (10) comprend en outre un certain nombre de fils métalliques ; dans lequel chacun desdits fils métalliques englobe une extrémité distale qui est disposée à l'écart des autres fils métalliques.

11. Procédé de confection d'un bandage pneumatique, qui comprend un bouchon polymère, selon au moins une des revendications précédentes, le procédé comprenant l'étape au cours de laquelle on injecte un polymère liquide (68) dans la chambre (42) et on vulcanise le polymère liquide (68) pour procurer, de cette manière, dans la chambre (42), le polymère liquide qui a été solidifié par l'intermédiaire d'une vulcanisation.

12. Procédé selon la revendication 11, dans lequel le récipient (38) est fixé au bandage pneumatique (12) après que le polymère liquide a été vulcanisé.

13. Procédé de confection d'un bandage pneumatique, qui comprend un bouchon polymère, selon au moins une des revendications précédentes, le procédé comprenant l'étape au cours de laquelle on forme la chambre (42) par le fait : (i) d'insérer un objet, dans un élément qui a été sélectionné parmi les éléments de bande de roulement (32), à partir d'une direction d'une cavité (30) du bandage pneumatique avant une vulcanisation du bandage pneumatique (12) et de retirer l'objet après la vulcanisation du bandage pneumatique (12) ; ou (ii) de forer dans un élément qui a été sélectionné parmi les éléments de bande de roulement (32) à partir d'une direction d'une cavité (30) du bandage pneumatique.
